# EUROPEAN PATENT SPECIFICATION

(11) **EP 1 256 553 B1**
(45) Date of publication and mention of the grant of the patent: **23.03.2011**
(21) Application number: 02090166.6
(22) Date of filing: 07.05.2002
(51) Int. Cl.: C03B 37/014, B23B 31/16

(54) **Apparatus and method for producing a glass preform for optical fibres by deposition**
Vorrichtung und Verfahren zum Herstellen von einer Vorform für optische Fasern durch Abscheidung
Dispositif et procédé de fabrication d'une préforme pour fibres optiques par dépôt

(30) Priority: 08.05.2001 JP 2001136988; 07.06.2001 JP 2001171961; 03.07.2001 JP 2001202438; 29.11.2001 JP 2001364866; 27.12.2001 JP 2001396363
(43) Date of publication of application: 13.11.2002
(73) Proprietor: Shin-Etsu Chemical Co., Ltd., Chiyoda-ku Tokyo 100 (JP)
(72) Inventor: Takei, Junichiro, c/o Shin-Etsu Chemical Co., Ltd., Annaka-shi, Gunma-ken (JP); Tobisaka, Yuji, c/o Shin-Etsu Chemical Co., Ltd., Annaka-shi, Gunma-ken (JP); Machida, Hiroshi c/o Shin-Etsu Chemical Co., Ltd., Annaka-shi, Gunma-ken (JP); Kume, Hiroyuki c/o Shin-Etsu Chemical Co., Ltd., Annaka-shi, Gunma-ken (JP); Shimada,Tadakatsu c/o Shin-Etsu Chemical Co., Ltd., Annaka-shi, Gunma-ken (JP); Yokokawa, Kiyoshi c/o Shin-Etsu Chemical Co., Ltd., Annaka-shi, Gunma-ken (JP)
(74) Representative: Pfenning, Meinig & Partner GbR

(56) References cited:
- EP-A- 1 065 175
- WO-A-01/23311
- DE-A- 3 929 194
- US-A- 4 740 226
- PATENT ABSTRACTS OF JAPAN vol. 2000, no. 06, 22 September 2000 (2000-09-22) & JP 2000 086271 A (SUMITOMO ELECTRIC IND LTD), 28 March 2000 (2000-03-28)
- PATENT ABSTRACTS OF JAPAN vol. 004, no. 038 (C-004), 27 March 1980 (1980-03-27) & JP 55 010438 A (FURUKAWA ELECTRIC CO LTD:THE), 24 January 1980 (1980-01-24)
- PATENT ABSTRACTS OF JAPAN vol. 009, no. 112 (C-281), 16 May 1985 (1985-05-16) & JP 60 005032 A (NITSUTOU KOUKI KK), 11 January 1985 (1985-01-11)
- PATENT ABSTRACTS OF JAPAN vol. 011, no. 268 (C-444), 29 August 1987 (1987-08-29) & JP 62 072538 A (HITACHI LTD), 3 April 1987 (1987-04-03)
- PATENT ABSTRACTS OF JAPAN vol. 2000, no. 03, 30 March 2000 (2000-03-30) -& JP 11 343135 A (FURUKAWA ELECTRIC CO LTD), 14 December 1999 (1999-12-14)
- PATENT ABSTRACTS OF JAPAN vol. 2002, no. 06, 4 June 2002 (2002-06-04) & JP 2002 053325 A (SHIN ETSU CHEM CO LTD), 19 February 2002 (2002-02-19)
- PATENT ABSTRACTS OF JAPAN vol. 1998, no. 03, 27 February 1998 (1998-02-27) -& JP 09 286629 A (MITSUBISHI CABLE IND LTD), 4 November 1997 (1997-11-04)

## Description

### BACKGROUND OF THE INVENTION

### 1. Field of the Invention

The present invention relates to a glass base material manufacturing apparatus. More particularly, the present invention relates to a glass base material manufacturing apparatus for manufacturing a high quality glass base material.

### 2. Description of the Related Art

The glass-base-material was manufactured by such as an outside vapor deposition (OVD) method or a vapor-phase axial deposition (VAD) method. The OVD method accumulates glass particles, which are ejected from a burner, on a surface of a rotated core rod. Conventionally, both ends of the core rod were held by a single scroll chuck and were rotated by rotating the scroll chuck. The burners and the core rod are mounted within a chamber, which expands due to the heat generated by the burner.

Due to the stress caused by the expansion of the chamber, it may be distorted or broken.

An apparatus for producing an optical fiber preform is disclosed in JP Hei 9-28 6629.

### SUMMARY OF THE INVENTION

Therefore, it is an object of the present invention to provide a glass base material manufacturing apparatus, which is capable of overcoming the above drawbacks accompanying the conventional art.

The object can be achieved by the features described in claim 1. The dependent claims define further advantageous and exemplary combinations of the present invention.

According to the present invention, an apparatus for manufacturing a glass base material, which is a base material of an optical fiber, the glass base material having a core rod as a central axis, comprises a burner that hydrolyzes a gas material, which is a base material of the glass base material, into glass particles and accumulates the glass particles around the core rod to form the glass base material; a chamber installed on a floor, the chamber accommodating the core rod and the burner; and a supporting unit formed on a bottom face of the chamber and contacting with the floor for supporting the chamber, the supporting unit comprising a fixed leg fixed on the floor and a plurality of movable legs which are movable with respect to the floor.

The fixed leg may be disposed on the chamber on a center line thereof in at least one of the longitudinal direction and the widthwise direction. The fixed leg may be disposed on the chamber except on a corner of the chamber. The apparatus may further comprise a core-rod-rotation unit for rotating the core rod around a central axis of the core rod, and the core-rod-rotation unit being provided outside the chamber.

### BRIEF DESCRIPTION OF THE DRAWINGS

Fig. 1 shows a configuration of a glass-base-material manufacturing apparatus of the present embodiment.
Fig. 2 shows a plan view of the bottom side of a chamber 32 and the supporting unit 35 of the present embodiment.
Figs. 3A and 3B show examples of the movable legs 34.
Fig. 4 shows another example of the supporting unit 35.
Fig. 5 shows another example of the supporting unit 35.

### DETAILED DESCRIPTION OF THE INVENTION

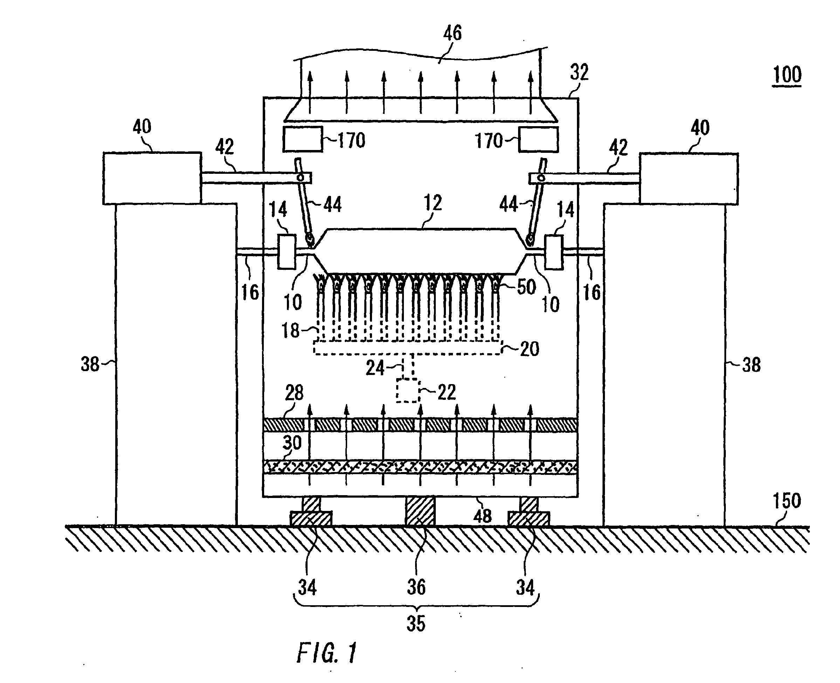

Fig. 1 shows a configuration of a glass-base-material manufacturing apparatus of the present embodiment. The glass-base-material manufacturing apparatus 100 comprises holding units 14, chuck shafts 16, core-rod-rotation units 38, a plurality of burners 18, a burner stage 20, a burner shaft 24, a burner moving unit 22, a filter 28, an air-regulating-plate 30, a chamber 32, a supporting unit 35, an exhaustion vent 46, side-burners 44, side-burner shafts 42, and a position-adjusting unit 40.

The holding units 14 hold each end of a core rod 10. Each of the chuck shafts 16 is connected to each end of the core rod 10 and the corresponding core-rod-rotation unit 38. The core-rod-rotation unit 38 rotates the core rod 10 around the central axis of the core rod 10 by rotating the chuck shaft 16. The core-rod-rotation unit 38 is provided outside the chamber 32. In Fig. 1, the core-rod-rotation unit 38 is provided on both sides of the core rod 10. However, the core-rod-rotation unit 38 may be provided only on one side of the core rod 10.

The plurality of burners 18 hydrolyzes a gas material, which is a base material of the glass base material 12, into glass particles and accumulates the glass particles around the core rod 10 to form a glass base material 12. The plurality of burners 18 is mounted on the burner stage 20. The burner stage 20 is supported by the burner shaft 24. The burner-moving unit 22 moves the burner shaft 24 along a longitudinal direction of the core rod 10 so that the plurality of burners 18 moves along a longitudinal direction of the core rod 10. A part of the bottom side of the burner 18, the burner stage 20, the burner shaft 24, and the burner-moving unit 22, which are shown by the hidden line, are provided outside the chamber 32 to protect the burner-moving unit 22 from the heat inside the chamber 32.

The filter 30 is formed inside the chamber 32. The filter 30 regulates a flow speed distribution of the cleaning gas that flows from the bottom of the chamber 32. The air-regulating-plate 28 is formed on an upper side of the filter 30 in the chamber 32. The air-regulating-plate 28 regulates a direction of a flow of the cleaning gas that passes through the filter 30. The air-regulating-plate 28 has a plurality of holes 29 to regulate a direction of a flow of the cleaning gas. The exhaustion vents 46 exhausts a cleaning gas existing inside the chamber 32. The exhaustion vent 46 is formed on a top of the chamber 32 along a longitudinal direction of the core rod 10.

The chamber 32 accommodates the core rod 10, holding units 14, a plurality of burners 18, a filter 28, and an air-regulating-plate 30. The chamber 32 may be a conventional chamber that has a frame, inner wall, insulation material, and outer wall, which are not shown in Fig. 1. For example, the chamber 32 may be made by welding the inner wall on a frame and further fixing the insulation material and the outer wall on the outer surface of the inner wall in order to prevent the heat inside the chamber 32 to be radiated from the chamber 32.

The shape of the chamber 32 may be box type as shown in Fig. 1, or any other shape that can accommodates the core rod 10 and the burners 18 inside. The material used for the inner wall or outer wall may be stainless steel, or any other material that can stand heating temperature of the burners 18 and can resist reaction gas. Windows 170 are provided on the sidewall of the chamber 32 for checking the position of the side-burner 44 from outside the chamber.

The side-burner 44 heats a longitudinal end of the accumulated glass base material 12. The longitudinal end of the accumulated glass base material 12 is heated to prevent the accumulated glass base material 12 from peeling away from the core rod 10 and causing cracks. The position-adjusting unit 40 adjusts a position of the side-burner 44. The position-adjusting unit 40 is provided outside the chamber 32. For example, in Fig. 1, the position-adjusting unit 40 is Provided on the core-rod-rotation unit 38, which is provided outside the chamber 32. However, the position-adjusting unit 40 may be provided on any other place outside the chamber 32.

The supporting unit 35 is formed on a bottom face of the chamber 32. The supporting unit 35 contacts with the floor 150 and supports the chamber 32. The supporting unit 35 has a fixed leg 36, which is fixed on the floor 150, and a plurality of movable legs 34 which are movable with respect to the floor 150.

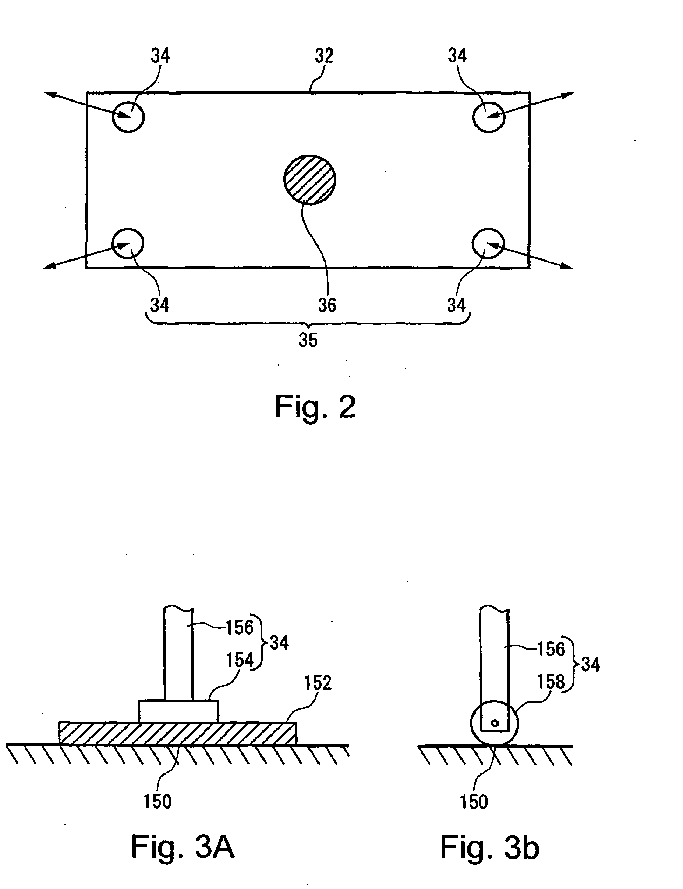

Fig. 2 shows a plan view of the bottom side of a chamber 32 and the supporting unit 35 of the present embodiment. As shown in Figs. 1 and 2, the supporting unit 35 has a fixed leg 36 fixed on the floor 150 and a plurality of movable legs 34 which are movable with respect to the floor 150. The fixed leg 36 is disposed on the chamber 32 except on a corner of the chamber 32. Specifically, the fixed leg 36 is disposed on the chamber 32 on a centerline thereof in at least one of the lengthwise direction and the widthwise direction.

Figs. 3A and 3B show examples of the movable legs 34. In Fig. 3A, a metal plate 152 is mounted on the floor 150, and the movable leg 34 is placed on a metal plate 152. The movable leg 34 has a supporting shaft 156 and a supporting plate 154, which is fixed on the supporting shaft 156. Grease is applied on the metal plate 152 so that the movable leg 34 can slide on the metal plate 152, the surface of which is smooth. Also, as shown in Fig. 3B, the movable legs 34 may have a wheel or roller 158 that rotates on the floor 150.

During the manufacturing process of the glass base material 12, temperature in the chamber 32 increases by the heat generated by the burners 18. Especially, when there is a plurality of burners 18 in the chamber 32 as shown in Fig. 1, the heat generated inside the chamber 32 becomes intense. Also, the burners 18 move only a limited region along the longitudinal direction of the core rod 10 when there is a plurality of burners 18. Thus, the burner 18 exists at the specific region in the chamber 32. Therefore, the temperature of the specific region, where the chamber 32 receives the heat of the burners 18, increases.

Because the heat increases inside the chamber 32 by the burners 18, the size of the chamber 32 expands. If all the legs are fixed on the floor 150, the chamber 32 may be distorted or broken owing to the stress caused by the expansion of the chamber 32. Thus, the present embodiment has a fixed leg 36 and a plurality of movable legs 34 to remove the stress caused by the expansion of the chamber 32.

In Fig. 2, the fixed leg 36 is disposed on substantially the centerline of both the longitudinal direction and the widthwise direction of the bottom of the chamber 32. The movable legs 34 are disposed on each of the corners of the bottom of the chamber 32. As shown in Fig. 2, when the chamber expands by the heat inside chamber 32, the movable legs 32 move radially from the fixed leg 36 as the center in the direction shown by the arrows. Thus, the heat expansion is dispersed in the radial direction shown by the arrows. Therefore, the stress caused by the heat expansion of the chamber 32 is removed by the radial movement of the movable legs 34. Thus, the supporting unit 35 of the present embodiment can prevent the permanent deformation or damage of the chamber 32.

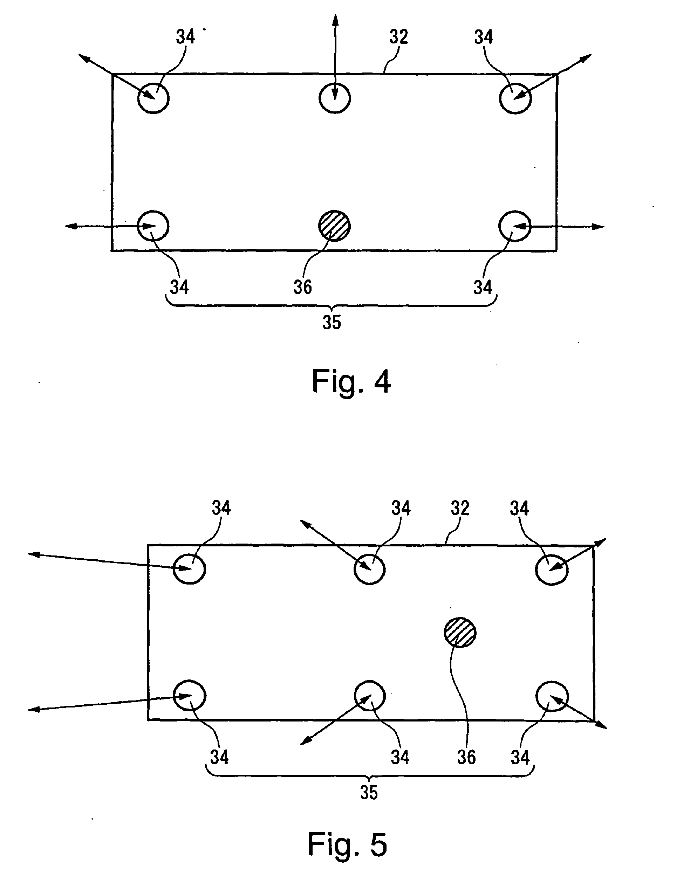

The configuration of the movable legs 34 is not limited to Figs. 3A and 3B, but may be any configurations that can move in the direction of the heat expansion of the chamber 32. The movement of the movable legs 34 maybe limited in the height direction to prevent the chamber 32 from overturning. The number of movable legs 34 may be four as shown in Fig. 2, five as shown in Fig. 4 or six as shown in Fig. 5. The number of movable legs 34 is determined according to the size of the chamber 32.

Fig. 4 shows another example of the supporting unit 35. The fixed leg 36 is disposed on the chamber 32 on a centerline thereof in the lengthwise direction of the chamber 32 and close to the end of chamber in the widthwise direction. The movable legs 34 are provided on five locations. Four movable legs are disposed on the corners of the chamber 32, and one movable leg 34 is disposed on the centerline of the chamber 32 in the lengthwise direction of the chamber 32 and close to the end of chamber 32 in the widthwise direction, which is the opposite side of the fixed leg 36. The movable legs 34 move from the fixed leg 36 as a center in the direction shown by the arrow according to the increase of the size of the chamber 32. Thus, the stress caused by the heat expansion can be removed by the present embodiment.

Fig. 5 shows another example of the supporting unit 35. The fixed leg 36 is disposed on the chamber 32 on a centerline thereof in the widthwise direction of the chamber 32 and located to the right-handside of the chamber 32 in the lengthwise direction in Fig. 5. The movable legs 34 are provided on the six locations of the corners and the end part in the widthwise direction of the chamber 32. The movable legs 34 move from the fixed leg 36 as a center in the direction shown by the arrow, especially in the left direction according to the increase of the size of the chamber 32. Thus, the stress caused by the heat expansion can be removed by the present embodiment.

The core-rod-rotation unit 38 is provided outside the chamber 32 in order to prevent the distance between the holding units 14 to be changed by the heat expansion of the chamber 32, which may cause the breakage of the glass base material 12.

### [EXAMPLE 1]

A glass base material was manufactured using the apparatus shown in Fig. 2. The supporting unit 35 shown in Fig. 3A was used. The fixed leg 36 was fixed on the floor 150 by an anchor, not shown in the figures. A metal plate 152 having a thickness of 30 mm was mounted on the floor 15 0. The area of the metal plate 152 was greater than the area of the supporting plate 154. Grease was applied on the surf ace of the metal plate 152. Then, the movable legs 34 were mounted on the metal plate 152. The metal plate 152 mounted on the floor 150 is fixed on the floor 150 by the anchor.

The size of the chamber 32 was 3.5 m in width, 2 m in length, and 1.5 m in depth. The chamber 32 has an opening for burners 18 and an opening for exhaustion.

The condition of raw material gas supplied to the burner 18 was 50 N1/min per burner of hydrogen gas (H₂), 30 N1/min per burner of oxygen gas (O₂), and 3.5 g/min per burner of raw material gas of silicon chloride (SiCl₄) at the initial stage of the accumulation of the glass particles on the core rod 10. Furthermore, the condition of raw material gas supplied to the burner 18 was adjusted to be 100 N1/min per burner of hydrogen gas (H₂), 50 N1/min per burner of oxygen gas (O₂), and 23 g/min per burner of raw material gas of silicon chloride (SiCl₄) according to the growth of the glass base material 12 at an end of the accumulation of the glass particles.

The burner-moving unit 22 had a high-speed axis and a low-speed axis to move the burner shaft 24. The high-speed axis moves the burner shaft 24 with high speed, and the, low-speed axis moves the burner shaft 24 with a speed lower than the high-speed axis. The high-speed axis was moved with the speed of 1000 mm/min, and the low-speed axis was moved with the speed of 20 mm/min. The moving distance of both the high-speed axis and the low-speed axis was 150 mm. 10 burners 18 were mounted on the burner stage 20 at 150 mm intervals. The distance between the burners 18 and the glass base material 12 was controlled to be constant during the accumulation process.

The condition of the chamber 12 was observed during the accumulation process. The temperature inside the chamber 32 during the accumulation process was almost the same as the conventional chamber. However, no strain was observed on the inner wall of the chamber 32 after the end of the accumulation process. The amount of deformation of the chamber 32 was measured by measuring the amount of movement of the movable leg 34. The amount of movement of the movable leg 34 was 10 mm. Therefore, the stress caused by the heat expansion of the chamber 12 was removed by the movable legs 34.

### [COMPARATIVE EXAMPLE]

A glass base material was manufactured using a chamber that has a supporting unit including legs, all of which were fixed on the floor by an anchor. The glass base material was manufactured according to the same condition with that of EXAMPLE 1 except the configuration of the supporting unit.

The condition of the chamber was observed during the accumulation process. The temperature was increased over 300°C inside the chamber 32 during the accumulation process. There was strain in the inner wall of the chamber 32 after the end of the accumulation process because the stress caused by the heat expansion could not escape. The strain was greater at the center part of the chamber 32 than the strain at the other parts.

As explained above, the apparatus 100 of the present embodiment can select the direction, to which the stress caused by the heat expansion is removed, by selecting the position of the fixed leg 36 and the movable legs 34 on the chamber 32. The position of the fixed leg 36 on the chamber 32 may be determined according to the location of the chamber 32 in the factory, equipment provided around the apparatus 100, a working space, and so on.

## Claims

1. An apparatus (100) for manufacturing a glass base material (12) of an optical fiber, said glass base material (12) having a core rod (10) as a central axis, the apparatus comprising: a burner (18) for hydrolyzing a gas material, which is a precursor of said glass base material (12), into glass particles which accumulate around said core rod (10) to form said glass base material (12); a chamber (32) installed on a floor (150), said chamber (32) accommodating said burner (18) and suitable for accommodating said core rod (10));
**characterized in that** the apparatus (100) further comprises: a supporting unit (35) formed on a bottom surface of said chamber (32) and contacting the floor (150) for supporting said chamber (32), and wherein said supporting unit (35) comprises a fixed leg (36) fixed on said floor (150) and a plurality of movable legs (34) which are movable with respect to said floor (150) .

2. The apparatus as claimed in claim 1, **characterized in that** said fixed leg (36) is disposed on said chamber (32) on a center line thereof in at least one of the lengthwise direction and the widthwise direction.

3. The apparatus as claimed in claim 1, **characterized in that** said fixed leg is disposed on said chamber (32), except on a corner of said chamber (32).

4. The apparatus as claimed in claim 1 further comprising: a core-rod-rotation unit (38) for rotating said core rod (10) around a central axis of said core rod (10) and said core-rod-rotation unit (38) being provided outside the said chamber (32).

## Patentansprüche

1. Vorrichtung (100) zum Herstellen eines Glasbasismaterials (12) einer optischen Faser, welches Glasbasismaterial (12) einen Kernstab (10) als eine Mittelachse hat, wobei die Vorrichtung aufweist:
einen Brenner (18) zum Hydrolisieren eines Gasmaterials, das ein Vorläufer des Glasbasismaterials (12) ist, in Glaspartikel, die sich um den Kernstab (10) herum ansammeln, um das Glasbasismaterial (12) zu bilden; eine auf einem Boden (150) installierte Kammer (32), welche Kammer (32) den Brenner (18) aufnimmt und geeignet zur Aufnahme des Kernstabs (10) ist;
**dadurch gekennzeichnet, dass** die Vorrichtung weiterhin aufweist:
eine Stützeinheit (35), die auf einer unteren Fläche der Kammer (32) gebildet und mit dem Boden (150) zum Stützen der Kammer (32) in Kontakt ist, und wobei die Stützeinheit (35) ein auf dem Boden (150) befestigtes festes Bein (36) und
mehrere bewegbare Beine (34), die mit Bezug auf den Boden (150) bewegbar sind, aufweist.

2. Vorrichtung nach Anspruch 1, **dadurch gekennzeichnet, dass** das feste Bein (36) sich auf der Kammer (32) auf einer Mittellinie von dieser in zumindest einer von der Längsrichtung und der Breitenrichtung befindet.

3. Vorrichtung nach Anspruch 1, **dadurch gekennzeichnet, dass** das fest Bein sich auf der Kammer (32), ausgenommen auf einer Ecke der Kammer (32), befindet.

4. Vorrichtung nach Anspruch 1, weiterhin aufweisend:
eine Kernstab-Dreheinheit (38) zum Drehen des Kernstabs (10) um eine Mittelachse des Kernstabs (10), wobei die Kernstab-Dreheinheit (38) außerhalb der Kammer (32) vorgesehen ist.

## Revendications

1. Appareil (100) pour fabriquer un matériau de base en verre (12) d'une fibre optique, ledit matériau de base en verre (12) ayant une tige de noyau (10) en tant qu'axe central, l'appareil comprenant : un brûleur (18) pour hydrolyser un matériau gazeux, qui est un précurseur dudit matériau de base en verre (12), en particules de verre qui s'accumulent autour de ladite tige de noyau (10) afin de former ledit matériau de base en verre (12) ; une chambre (32) installée sur un plancher (150), ladite chambre (32) logeant ledit brûleur (18) et étant appropriée pour loger ladite tige de noyau (10) ;
**caractérisé en ce que** l'appareil (100) comprend en outre : une unité de support (35) formée sur une surface inférieure de ladite chambre (32) et en contact avec le plancher (150) pour supporter ladite chambre (32), et dans lequel ladite unité de support (35) comprend une patte fixe (36) fixée sur ledit plancher (150) et une pluralité de pattes mobiles (34) qui sont mobiles par rapport audit plancher (150).

2. Appareil selon la revendication 1, **caractérisé en ce que** ladite patte fixe (36) est disposée sur ladite chambre (32) sur sa ligne centrale dans au moins l'un parmi le sens de la longueur et le sens de la largeur.

3. Appareil selon la revendication 1, **caractérisé en ce que** ladite patte fixe est disposée sur ladite chambre (32), excepté sur un coin de ladite chambre (32).

4. Appareil selon la revendication 1, comprenant en outre : une unité de rotation de tige de noyau (38) pour faire tourner ladite tige de noyau (10) autour d'un axe central de ladite tige de noyau (10) et ladite unité de rotation de tige de noyau (38) étant prévue à l'extérieur de ladite chambre (32).
